# EUROPÄISCHE PATENTSCHRIFT

(11) **EP 1 166 932 B1**
(45) Veröffentlichungstag und Bekanntmachung des Hinweises auf die Patenterteilung: **28.03.2007**
(21) Anmeldenummer: 01113246.1
(22) Anmeldetag: 31.05.2001
(51) Int. Cl.: B23B 31/26

(54) **Spindel in einer Werkzeugmaschine**
Spindle in a machine tool
Broche de une machine-outil

(30) Priorität: 26.06.2000 DE 10031027
(43) Veröffentlichungstag der Anmeldung: 02.01.2002
(73) Patentinhaber: OTT-JAKOB GmbH & Co. Spanntechnik KG, 87663 Lengenwang (DE)
(72) Erfinder: Prust, Dirk, 78532 Tuttlingen (DE); Haninger, Rudolf, 78606 Seitingen-Oberflacht (DE)
(74) Vertreter: Schwarz, Thomas

(56) Entgegenhaltungen:
- EP-A- 0 787 549

## Beschreibung

Die Erfindung betrifft eine Spindel in einer Werkzeugmaschine nach dem Oberbegriff des Anspruchs 1.

Eine Spindel mit einem derartigen Spannmechanismus ist aus der EP 0 787 549 A1 bekannt.

Bei einem in Figur 8 dieser Druckschrift offenbarten Spannmechanismus wird der Werkzeughalter mit seinem Außenkegel in eine komplementäre innenkegelige Aufnahme des Spindelkopfs eingeschoben. Ein Spanndorn des Spannmechanismus taucht dann in eine entsprechende Aufnahme im Schaft des Werkzeughalters ein. Der Spanndorn ist mittels einer axial angeordneten Zugstange axial verfahrbar. Zum Einspannen des Werkzeughalters befindet sich der Spanndorn in einer vorgeschobenen Betriebsstellung. Am Außenumfang des Spanndorns sind über den Umfang verteilt mehrere Segmente angeordnet. Die Segmente laufen am vorderen Ende in eine verdickten Kopf aus, der sich in dieser Betriebsstellung radial innen befindet. Wenn nun nach dem Einschieben des Schaftes in die Aufnahme des Spindelkopfes die Zugstange eingezogen wird, wird der Spanndorn mitgenommen. Über ein System von Gleitschrägen bewegen sich dann die Segmente radial nach außen. Die verdickten Köpfe der Segmente greifen dann hinter entsprechende Vorsprünge in der Aufnahme im Schaft des Werkzeughalters, so daß dieser formschlüssig axial fixiert wird.

In axialer Richtung hinter dem Spanndorn befindet sich eine Krone mit mehreren über den Umfang verteilten Ausnehmungen, in denen die rückwärtigen Enden der Segmente gehalten sind. Die Krone liegt über weitere Führungsschrägen an den Segmenten an. Beim Spannen des Spannmechanismus wird die Krone gegen die Kraft einer Feder nach hinten geschoben. Beim Entspannen des Spannmechanismus drückt die Feder die Krone wieder nach vorne, wobei die Schrägführung zwischen Krone und Segmenten bewirkt, daß diese wieder in ihre radial innere Betriebsstellung gelangen.

Bei diesen herkömmlichen Spannmechanismen kann nun eine Fehlfunktion dadurch auftreten, daß die Segmente sowohl in ihrer radial inneren Betriebsstellung (bei entspanntem Spannmechanismus) wie auch in den Zwischenpositionen zwischen den beiden Betriebsstellungen undefinierte Lagen einnehmen. Dies gilt insbesondere für das axial vordere Ende der Segmente. Diese könnten beispielsweise nicht in ihre radial innere Betriebsstellung zurückkehren, obwohl die Segmente vom hinteren Ende her durch die unter Federkraft vorlaufende Krone entsprechend bewegt werden. Wenn dann die Segmente mit ihrem vorderen Ende in einer undefinierten Lage sind, kann es beim Einsetzen des nächsten Werkzeughalters zu Fehlfunktionen kommen. Insbesondere kann bereits eine formschlüssige Verbindung zwischen Werkzeughalter und Spindelaufnahme hergestellt werden, die bewirkt, daß der Werkzeughalter bereits in diesem Zeitpunkt von der mit langsamer Kupplungsdrehzahl umlaufenden Aufnahme der Spindel mitgenommen wird. Dann kann aber die herkömmliche Verbindung zwischen einem Nutenstein und einer Nut zwischen Aufnahme und Werkzeughalter nicht eingreifen, so daß keine arbeitsfähige Verbindung zwischen Werkzeughalter und Spindel hergestellt wird.

Außerdem kann bei derartig undefinierten Situationen eine Beschädigung der Segmente eintreten.

Der Erfindung liegt demgegenüber die Aufgabe zugrunde, eine Spindel der eingangs genannten Art dahingehend weiterzubilden, daß die vorstehend genannten Probleme vermieden werden. Insbesondere soll ein sicheres Einkuppeln des Werkzeughalters in die Spindel erreicht und es sollen Beschädigungen an den Elementen des Spannmechanismus vermieden werden.

Diese Aufgabe wird durch eine Spindel mit den Merkmalen des Anspruchs 1 gelöst.

Die zweite Führung gewährleistet nämlich, daß sich alle Segmente stets in einer definierten Position befinden, also auch und gerade in den beiden Betriebsstellungen, die den radialen Endlagen entsprechen. Es ist auf diese Weise sichergestellt, daß ein neuer Werkzeughalter immer unter definierten Bedingungen mit seinem Schaft in die Aufnahme der Spindel eingesetzt werden kann und dort nach kurzem Suchlauf der Spindelaufnahme mit der Kupplungsdrehzahl auch die formschlüssige Verbindung zwischen Nutenstein und Nut hergestellt wird, so daß der Werkzeughalter nicht nur in der richtigen Winkellage eingespannt ist sondern auch eine zuverlässige kraftschlüssige Verbindung im Bereich des Kegelsitzes zwischen Schaft und Aufnahme hergestellt ist.

Bei einer bevorzugten Weiterbildung der erfindungsgemäßen Spindel erstrecken sich die Segmente entlang der Achse, wobei die erste Führung an beiden axialen Enden und die zweite Führung nur an einem axialen Ende der Segmente angreift.

Diese Maßnahme hat den Vorteil, daß die zweite Führung auf das notwendige Minimum beschränkt werden kann und dadurch eine kostengünstige und baulich einfache Lösung möglich ist.

Bei einer bevorzugten Weiterbildung des vorgenannten Ausführungsbeispiels greift die zweite Führung am von der Aufnahme wegweisenden axialen Ende der Segmente an.

Diese Maßnahme hat den Vorteil, daß die Elemente der zweiten Führung nach hinten in die Spindel verlegt werden können, so daß im vorderen Bereich keine störenden Einbauten erforderlich sind.

Bei einem weiteren bevorzugten Ausführungsbeispiel der Erfindung greift die ersten Führung in der zweiten Betriebsstellung nur am von der Aufnahme wegweisenden axialen Ende der Segmente an.

Diese dem Stand der Technik entsprechende Merkmalsgruppe hat sich in der Praxis bewährt und bedeutet, daß die erfindungsgemäß vorgesehenen Maßnahmen auch bei im übrigen herkömmlichen Spannmechanismen eingesetzt und diese gegebenenfalls auch nachgerüstet werden können.

Bei einer weiteren Ausführungsform der Erfindung ist vorgesehen, daß die Führungen als Schrägführungen ausgebildet sind, wobei die Segmente vorzugsweise eine im Radialschnitt im wesentlichen kreisbogenförmige Gestalt aufweisen und die Schrägführungen durch konische Schrägen gebildet werden.

Diese Maßnahmen haben den Vorteil, daß an sich bekannte und bewährte Elemente für die Schrägführungen eingesetzt werden können. Mittels einer einzigen axial gerichteten Kraft lassen sich auf diese Weise alle Führungsbewegungen erzeugen bzw. davon ableiten.

Die Krone wird in vorteilhafter Weise beim axialen Verschieben des Spanndorns gegen die Kraft einer Feder axial verspannt, wobei weiter vorzugsweise die Feder in der zweiten Betriebsstellung entspannt ist.

Schließlich ist bei einer derartigen Krone erfindungsgemäß vorgesehen, daß sie einen die Feder haltenden zylindrischen Abschnitt sowie eine Mehrzahl von axial vorstehenden Schuhen aufweist, an denen die ersten konischen Schrägen angeformt sind.

Besonders bevorzugt ist in diesem Zusammenhang, wenn die Hülse axial fest angeordnet ist.

Diese Maßnahme hat den Vorteil, daß ein besonders einfacher Bewegungsablauf entsteht, weil für die zweite Führung keine gesonderte Kraftquelle oder Kraftableitung erforderlich ist, es vielmehr ausreicht, wenn sich die Hülse an der Spindel abstützen kann.

Gemäß zwei bevorzugten Varianten dieser Ausführungsbeispiele kann sich entweder die Krone radial außen und die Hülse radial innen befinden oder auch umgekehrt. Beide Ausführungsvarianten haben für sich genommen konstruktive Vorteile, die je nach Einsatzfall genutzt werden können.

Im Falle einer radial außen liegenden Krone ist ferner bevorzugt, wenn diese in einer Bohrung der Spindel geführt ist, wie man dies von herkömmlichen Anordnungen dieser Art bereits kennt.

Weitere Vorteile ergeben sich aus der Beschreibung der beigefügten Zeichnung. Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: einen Axialschnitt durch ein Ausführungsbeispiel einer erfindungsgemäßen Spindel, in einer ersten Betriebsstellung, in der sich ein Spannmechanismus der Anordnung im ungespannten Zustand befindet;
- Fig. 2: eine Darstellung, ähnlich Fig. 1, jedoch für eine zweite Betriebsstellung, in der ein Werkzeughalter in die Spindel eingespannt ist;
- Fig. 3: im vergrößerten Maßstab und als perspektivische Ansicht ein Detail aus einem Segment, wie es bei der Spindel gemäß Fig. 1 und 2 verwendet wird.

In den Figuren bezeichnet 10 als Ganzes eine Spindel einer Werkzeugmaschine, beispielsweise eines Bearbeitungszentrums, wie es zum Ausführen von programmgesteuerten Bohr-, Fräs- und anderen Arbeiten eingesetzt wird. Die Spindel 10 umfaßt einen Spindelkopf 12, der im dargestellten Ausführungsbeispiel nach unten weist. Dies ist jedoch nicht einschränkend zu verstehen, weil auch Werkzeugmaschinen mit horizontalachsiger Spindel bekannt sind.

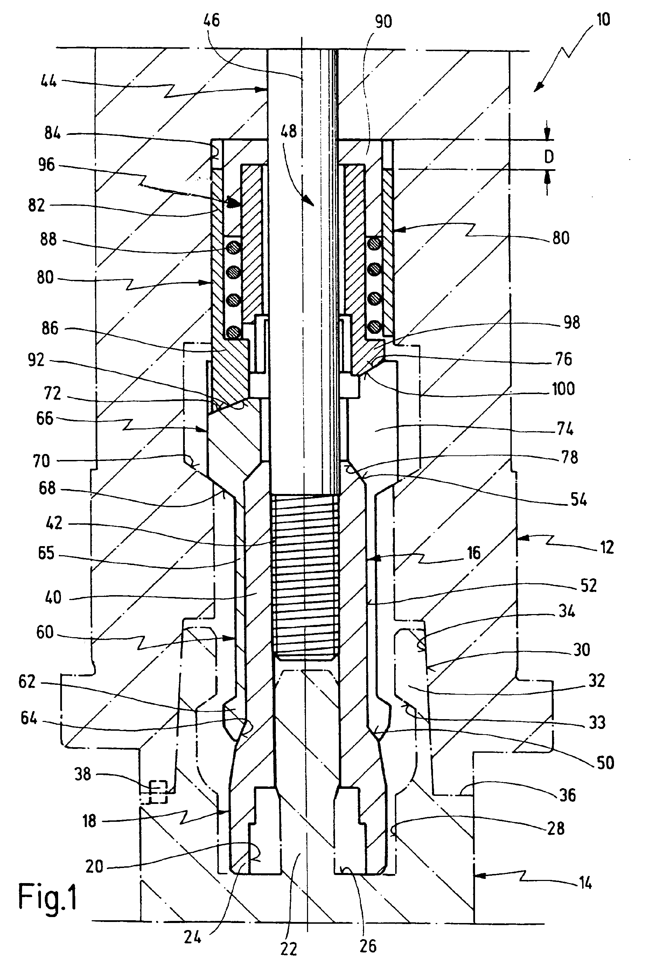

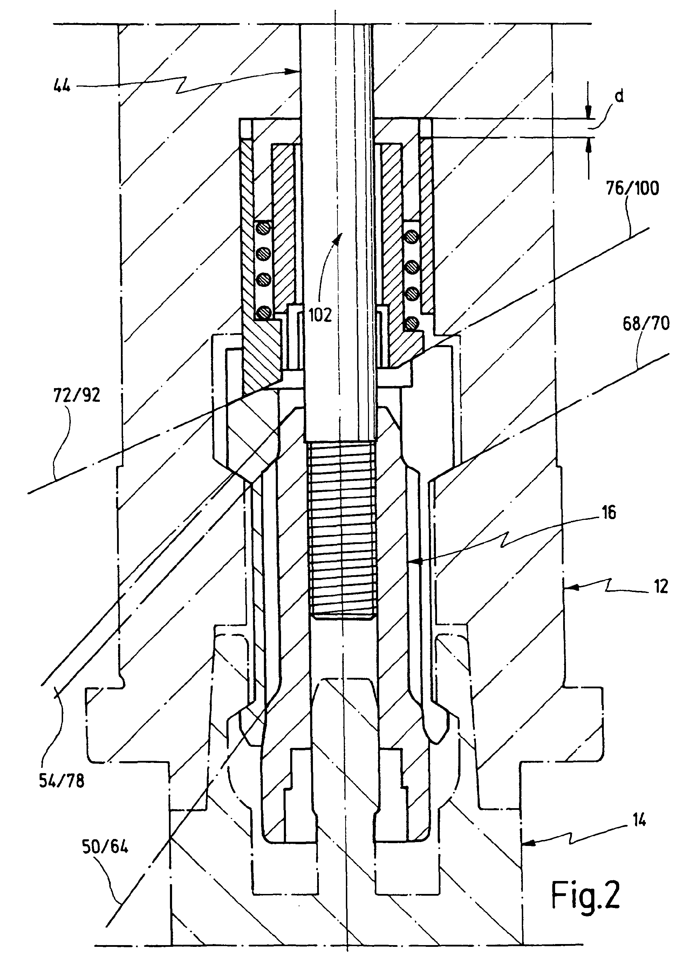

Im Spindelkopf 12 ist ein Werkzeughalter 14 gehalten, von dem in Fig. 1 und 2 nur das obere Ende strichpunktiert angedeutet ist. Zum Einziehen und Festhalten des Werkzeughalters 14 dient eine Spannzange 16, die am unteren Ende einen Spanndorn 18 aufweist. Der Spanndorn 18 hat an seinem unteren Ende eine erste Aufnahme 20, in die ein Zapfen 22 des Werkzeughalters 14 eingreift.

In der in Fig. 1 gezeichneten Lösestellung, in der noch keine feste Verbindung zwischen Werkzeughalter 14 und Spindelkopf 12 vorhanden ist, befindet sich ein vorderes Ende 24 des Spanndorns 18 gerade in Anlage an einem Boden 26 in einer zweiten, nach oben gerichteten Aufnahme 28 des Werkzeughalters 14.

Der Werkzeughalter 14 weist am oberen Ende einen Schaft mit einem Außenkegel auf, wobei der Außenkegel 30 die konische Außenumfangsfläche eines Halses 32 bildet. Der Hals 32 ist mit einer Hinterschneidung 33 versehen.

In dazu komplementärer Weise ist der Spindelkopf 12 an seinem nach unten weisenden Ende mit einer dritten Aufnahme versehen, die durch einen Innenkegel 34 gebildet wird.

Wenn der Werkzeughalter 14 mit seinem Schaft und Außenkegel 30 von unten in die dritte Aufnahme mit dem Innenkegel 34 eingeschoben wird, so geschieht dies, bis der Werkzeughalter 14 und der Spindelkopf 12 in einer Radialebene 36 aneinander stoßen. Im Bereich dieser Radialebene 36 befindet sich auch eine Indexiervorrichtung 38 mit einem Nutenstein und einer Nut, wobei sich üblicherweise der Nutenstein am Spindelkopf 12 und die Nut am Werkzeughalter 14 befindet. Beim Einkuppeln des Werkzeughalters 14 in den Spindelkopf 12 läuft der Spindelkopf 12 in herkömmlicher Weise mit geringer Drehzahl, der sogenannten Kupplungsdrehzahl um, bis der Nutenstein in die Nut einfällt. Damit ist der Werkzeughalter 14 in Umfangsrichtung in einer indexierten Position festgelegt.

Die Spannzange 16 ist in ihrem hinteren Bereich 40 mit einem Innengewinde 42 versehen, in das eine Zugstange 41 eingeschraubt ist.

Alle vorgenannten Elemente sind im wesentlichen rotationssymmetrisch ausgebildet und zwar in Bezug auf eine Achse 46 der Spindel 10.

Die Zugstange 44 kann in Richtung der Achse 46 in an sich bekannter Weise verschoben werden, wie mit einem Pfeil 48 angedeutet.

Der Spanndorn 18 ist an seinem in Fig. 1 und 2 unteren Ende etwas verdickt, wobei im Übergangsbereich zur Verdickung eine erste Schräge 50 angebracht ist. Von der ersten Schräge 50 verläuft die Spannzange 16 dann in axialer Richtung nach oben in einem zylindrischen Bereich 52, um sich dann über eine zweite Schräge 54 wieder zu verjüngen.

Wenn im Rahmen der vorliegenden Anmeldung von "Schräge" die Rede ist, so sind darunter aufgrund der im wesentlichen rotationssymmetrischen Ausbildung der verwendeten Elemente, mindestens aber der kreisbogenförmigen Ausbildung, vorzugsweise jeweils konische Flächen zu verstehen.

Auf dem zylindrischen Bereich 52 und den Schrägen 50 und 54 der Spannzange 16 liegen in der in Fig. 1 gezeigten Betriebsstellung Segmente 60 auf. Segmente dieser Art sind an sich bekannt. In der Praxis wird eine Mehrzahl derartiger Segmente über den Umfang des Spanndorns 18 gleichmäßig verteilt vorgesehen.

Die Segmente 60 sind an ihrem unteren Ende mit einem verdickten Kopf 62 versehen. An dessen Innenseite ist eine dritte Schräge 64 ausgebildet, die komplementär zur ersten Schräge 50 ausgebildet ist. Nach oben schließt sich dann in den Segmenten 60 ein mittlerer Abschnitt 65 an, der radial verhältnismäßig dünn ausgebildet ist. An den mittleren Abschnitt 65 schließt sich dann oben ein Führungsabschnitt 66 an, der wiederum radial dikker gestaltet ist.

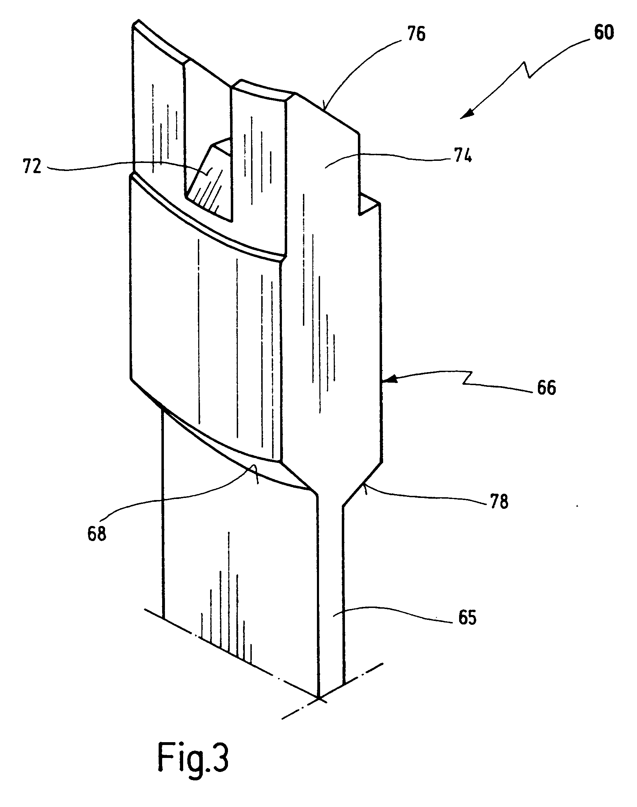

Der Führungsabschnitt 66 ist in Fig. 3 in vergrößertem Maßstab und perspektivisch dargestellt, um das Verständnis der Erfindung zu erleichtern.

Der Führungsabschnitt 66 weist demgemäß eine vierte Schräge 68 auf, die sich an der Außenseite der Segmente 60 befindet und sich im dargestellten Ausführungsbeispiel in axialer Richtung nach oben und außen erstreckt.

Eine fünfte Schräge 70 ist in dazu komplementärer Weise am Gehäuse des Spindelkopfes 12 ausgebildet.

Eine sechste Schräge 72 ist an der Oberseite des Führungsabschnitts 66 vorgesehen, wobei diese sechste Schräge 72 entgegengesetzt zur vierten Schräge 68, d.h. nach oben und innen gerichtet ist.

Wie bereits erwähnt wurde, sind mehrere Segmente 60 über den Umfang des Spanndorns 18 herum verteilt vorgesehen. Jedes Segment 60 hat daher im Radialschnitt eine kreisbogenförmige Gestalt. Am oberen Ende des Führungsabschnitts 66 teilt sich dieser noch einmal gabelförmig auf, wobei die bereits erwähnte sechste Schräge 72 sich am Grunde der Gabel befindet (vergleiche Fig. 3), während sich rechts und links von der sechsten Schräge 72 zinkenartige Verlängerungen 74 nach oben erstrecken, die an ihrem oberen Ende mit einer siebten Schräge 76 versehen sind. Die siebte Schräge 76 ist wiederum nach oben und außen gerichtet.

Schließlich ist an der inneren Unterseite der Führungsabschnitte 68 noch jeweils eine achte Schräge 78 angebracht, die radial nach oben und innen verläuft. Diese achte Schräge 78 ist komplementär zur zweiten Schräge 54 am oberen Ende der Spannzange 16 ausgebildet.

Zur Fixierung der Segmente 60 in Umfangsrichtung und zu deren axialer Führung ist im hinteren Bereich der Aufnahmeöffnung des Spindelkopfes 12 noch eine Krone 80 vorgesehen. Die Krone 80 ist an ihrem Umfang mit axialen Schlitzen versehen, in die die Führungsabschnitte 66 der Segmente 60 eingreifen und teilweise darin laufen.

Die Krone 80 ist nach oben hin mit einem zylindrischen Abschnitt 82 versehen, der in einer komplementären Bohrung 84 am oberen Ende der Aufnahmeöffnung des Spindelkopfes 12 läuft.

Axial nach unten hin wird die Krone 80 durch eine Mehrzahl von ersten Schuhen 86 gebildet. Eine Rückstellfeder 88 ist in axialer Richtung zwischen der Rückseite der ersten Schuhe 86 und einem Topf 90 gehalten, der das obere Ende der Aufnahmebohrung im Spindelkopf 12 bildet.

Axial nach unten sind die ersten Schuhe 86 mit einer neunten Schräge 92 versehen, die komplementär zur sechsten Schräge 72 ausgebildet ist.

Schließlich befindet sich im axialen Bereich der Krone 80 noch eine Hülse 96, die sich axial fest nach oben gegen den Topf 90 abstützt. Die Hülse 96 ist nach unten mit einer Mehrzahl von zweiten Schuhen 98 versehen, die nach unten hin eine zehnte Schräge 100 aufweisen. Die zehnte Schräge 100 ist komplementär zur siebten Schräge 76 ausgebildet.

Im dargestellten Ausführungsbeispiel befindet sich die Hülse 96 radial innen und die Krone 80 radial außen. Es ist jedoch auch möglich, die Funktionen in der radialen Reihenfolge zu vertauschen und demgemäß die Krone radial nach innen und die Hülse radial nach außen zu legen.

Die Wirkungsweise der Spindel 10 soll nun erläutert werden:

Wie bereits weiter oben erwähnt wurde, zeigt Fig. 1 den Zustand der Spindel 10, in dem der Werkzeughalter 14 noch nicht eingespannt ist. Der Werkzeughalter 14 ist vielmehr lediglich lose von unten in die Aufnahmeöffnung des Spindelkopfes 12 eingesetzt worden, bis der Werkzeughalter 14 und der Spindelkopf 12 in der radialen Ebene 36 aneinander liegen.

Man erkennt aus Fig. 1 deutlich, daß die Segmente 60 dicht am Umfang der Spannzange 16 anliegen. Die radiale Störkontur von Spannzange 16 und Segmenten 60 ist daher kleiner als der Innendurchmesser des Halses 32.

Folglich ist es möglich, den Werkzeughalter mit seinem Schaft oder Außenkegel 30 nach oben in die Aufnahmeöffnung des Spindelkopfes 12 einzuführen, wobei die Spannzange 16 mit den Segmenten 60 dann in die zweite Aufnahme 28 am oberen Ende des Werkzeughalters 14 eingreift.

In diesem Zustand ist die Feder 88 entspannt und die Krone 80 befindet sich in einer unteren Betriebsstellung. Dies ist oben rechts in Fig. 1 mit dem Abstand D veranschaulicht, den das rückwärtige Ende des zylindrischen Abschnittes 82 der Krone 80 vom oberen Ende der Aufnahmebohrung im Spindelkopf 12 einhält.

Zum Spannen des Werkzeughalters 14 im Spindelkopf 12 wird nun die Zugstange 44 in Richtung des Pfeils 48 nach oben gezogen.

Diese Zugbewegung bewirkt, daß sich die Segmente 60 axial relativ zum Spanndorn 18 verschieben. Die Segmente 60 sind nämlich axial relativ zum Spanndorn 18 beweglich. Wenn nun der Spanndorn 18 nach oben gezogen wird, gleiten die verdickten Köpfe 62 der Segmente 60 über die Führung der Schrägen 50/64 auf das verdickte untere Ende des Spanndorns 18 auf und damit radial nach außen. Dies hat zur Folge, daß sich die verdickten Köpfe 62 in die Hinterschneidung 33 legen und damit den Werkzeughalter 14 im Spindelkopf 12 fixieren.

Gleichzeitig werden die Segmente 60 auch an ihrem axial oberen Ende radial nach außen bewegt. Dies wird zum einen dadurch bewirkt, daß der Spanndorn 18 mit der zweiten Schräge 54 an seinem axial hinteren Ende auf der achten Schräge 78 am unteren und inneren Ende des Führungsabschnitts 66 läuft und der Führungsabschnitt 66 gleichzeitig mit seiner unten und außen gelegenen, vierten Schräge 68 auf die fünfte Schräge 70 im Gehäuse des Spindelkopfes 12 aufläuft.

Gleichzeitig wird über eine weitere Führung, die durch die sechste Schräge 72 zusammen mit der neunten Schräge 92 gebildet wird, die Krone 80 axial nach oben geschoben und zwar gegen die Kraft der Feder 88. Der am rückwärtigen Ende des zylindrischen Abschnitts 82 eingehaltene Abstand D (Fig. 1) verringert sich daher zu d (Fig. 2).

Die Spindel 10 befindet sich nun in der zweiten Betriebsstellung gemäß Fig. 2, in der der Werkzeughalter 14 fest in den Spindelkopf 12 eingespannt ist.

Wenn nun für einen nachfolgenden Lösevorgang die Zugstange 44 wieder nach unten gedrückt wird, wie mit einem Pfeil 102 in Fig. 2 angedeutet, so bedeutet dies zunächst nur, daß die Spannzange 16 axial nach unten verschoben wird.

Damit auch die Segmente 60 aus der Betriebsstellung gemäß Fig. 2 in die Betriebsstellung gemäß Fig. 1 zurückkehren, entspannt sich die Feder 88 und drückt die Krone 80 nach unten, woraufhin die Segmente 60 über die Führung der Schrägen 72/92 axial nach unten und gleichzeitig radial nach innen bewegt werden.

Da dieser im Stand der Technik an sich bekannte Schritt nicht immer einwandfrei gelingt, weil das untere Ende der Segmente 60, insbesondere die verdickten Köpfe 62 durchaus auch in einer Zwischenposition verharren können, ist erfindungsgemäß eine zusätzliche Führung vorgesehen, die sowohl in der ersten Betriebsstellung gemäß Fig. 1 wie auch in allen Zwischenpositionen bis zur zweiten Betriebsstellung gemäß Fig. 2 wirkt.

Diese weitere Führung wird durch die siebte Schräge 76 zusammen mit der zehnten Schräge 100 gebildet.

Wie man nämlich deutlich aus den Fig. 1 und 2 erkennt, ist diese Führung während des gesamten Arbeitsspiels zwischen den beiden Betriebsstellungen im Eingriff, wobei die Hülse 96, an der sich die zehnte Schräge 100 befindet, axial fest gelagert ist.

Da bei der Rückkehr der Segmente 60 von der gespannten Betriebsstellung gemäß Fig. 2 in die gelöste Betriebsstellung gemäß Fig. 1 die Vorschubkraft über die Führung 72/92 aufgebracht wird, ist zur Stabilisierung die weitere Führung 76/100 in umgekehrter Weise gerichtet, so daß auf diese Weise ein unerwünschtes Verkippen der unteren Enden der Segmente 60 in radialer Richtung sicher vermieden wird. Die Führung 72/92 liegt nämlich auf einem sich nach unten öffnenden Konus, während die zusätzliche Führung 76/100 einen nach oben geöffneten Konus definiert.

## Patentansprüche

1. Spindel in einer Werkzeugmaschine mit einer Achse (46), mit einer in der Achse (46) liegenden Aufnahme (34) für einen Schaft (30) eines Werkzeughalters (14), und mit einem Spannmechanismus zum axialen Fixieren des Schaftes (30) in der Aufnahme (34), wobei der Spannmechanismus einen axial verschiebbaren Spanndorn (18), mehrere über den Umfang des Spanndorns (18) verteilte Segmente (60) und eine Krone (80) zur Fixierung des Segmente (60) in Umfangsrichtung enthält, wobei die Segmente (60) bei axialer Verschiebung des Spanndorns (18) mittels einer zwischen dem Spanndorn (18) und den Segmenten (60) wirkenden ersten Führung (50/64, 54/78) zwischen einer ersten und einer zweiten radialen Betriebsstellung radial bewegbar sind und in der ersten Betriebsstellung den Schaft (30) formschlüssig in der Aufnahme (34) fixieren und wobei die Krone (80) mit ersten Schrägen (92) versehen ist, die mit zweiten Schrägen (72) an den Segmenten (60) zusammenarbeiten, **dadurch gekennzeichnet, dass** im axialen Bereich der Krone (80) eine zur Krone (80) koaxial ausgebildete Hülse (96) mit dritten Schrägen (100) angeordnet ist, die mit vierten Schrägen (76) an den Segmenten (60) als zweite Führung (76/100) zusammenarbeiten, wobei die erste/zweite Schräge (92/72) entgegengesetzt zur dritten/vierten Schräge (100/76) geneigt ist.

2. Spindel nach Anspruch 1, **dadurch gekennzeichnet, dass** die Segmente (60) sich entlang der Achse (46) erstrecken und dass die erste Führung (50/64, 54/78) an beiden axialen Enden und die zweite Führung (76/100) nur an einem axialen Ende der Segmente (60) angreifen.

3. Spindel nach Anspruch 2, **dadurch gekennzeichnet, dass** die zweite Führung (76/100) am von der Aufnahme (34) weg weisenden axialen Ende der Segmente (60) angreift.

4. Spindel nach einem oder mehreren der Ansprüche 1, bis 3, **dadurch gekennzeichnet, dass** die erste Führung (50/64, 54/78) in der zweiten Betriebsstellung nur am von der Aufnahme (34) weg weisenden axialen Ende der Segmente (60) angreift.

5. Spindel nach einem oder mehreren der Ansprüche 1 bis 4, **dadurch gekennzeichnet, dass** die Führungen (50/64, 54/78, 68/70, 72/92; 76/100) als Schrägführungen ausgebildet sind.

6. Spindel nach Anspruch 5, **dadurch gekennzeichnet, dass** die Segmente (60) eine im Radialschnitt im wesentlichen kreisbogenförmige Gestalt aufweisen und dass die Schrägftihrungen (50/64, 54/78, 68/70, 72/92; 76/100) durch konischen Schrägen (50, 54, 64, 68, 70, 72, 76, 78, 92, 100) gebildet werden.

7. Spindel nach einem der Ansprüche 1 bis 6, **dadurch gekennzeichnet, dass** die Krone (80) beim axialen Verschieben des Spanndorns (18) gegen die Kraft einer Feder (88) axial verspannt wird.

8. Spindel nach Anspruch 7, **dadurch gekennzeichnet, dass** die Feder (88) in der zweiten Betriebsstellung entspannt ist.

9. Spindel nach Anspruch 7 oder 8, **dadurch gekennzeichnet, dass** die Krone (80) einen die Feder (88) haltenden, zylindrischen Abschnitt (82) sowie eine Mehrzahl von axial vorstehenden Schuhen (86) aufweist, an denen die ersten Schrägen (92) angeformt sind.

10. Spindel nach einem der Ansprüche 1 bis 9, **dadurch gekennzeichnet, dass** die Hülse (96) axial fest angeordnet ist.

11. Spindel nach einem der Ansprüche 1 bis 10, **dadurch gekennzeichnet, dass** die Krone (80) sich radial außen und die Hülse (96) sich radial innen befindet.

12. Spindel nach Anspruch 11, **dadurch gekennzeichnet, dass** die Krone (80) in einer Bohrung (84) der Spindel (10) geführt ist.

13. Spindel nach einem der Ansprüche 1 bis 10, **dadurch gekennzeichnet, dass** die Krone (80) sich radial innen und die Hülse (96) sich radial außen befindet.

## Claims

1. Spindle in a machine tool with an axis (46), with a receptacle (34) lying in the axis (46) for a shank (30) of a tool holder (14), and with a clamping mechanism for axial fixture of the shank (30) in the receptacle (34), the clamping mechanism comprising an axially displaceable clamping spindle (18), a plurality of segments (60) distributed over the circumference of the clamping spindle (18), and a ring (80) for fixture of the segments (60) in the circumferential direction, the segments (60) being moveable radially between a first and a second radial operating position by means of a first guide (50/64, 54/78) acting between the clamping spindle (18) and the segments (60) when the clamping spindle (18) is displaced axially, and immobilising the shank (30) in the receptacle (34) in a form-locking manner in the first operating position, and the ring (80) being provided with first bevels (92) which co-operate with second bevels (72) on the segments (60), **characterised in that** in the axial area of the ring (80) there is a sleeve (96) which is formed coaxially with the ring (80) and comprises third bevels (100) which co-operate with fourth bevels (76) on the segments (60) as second guide (76/100), the first/second bevel (92/72) being inclined in the opposite direction to the third/fourth bevel (100/76).

2. Spindle according to claim 1, **characterised in that** the segments (60) extend along the axis (46) and **in that** the first guide (50/64, 54/78) bears at both axial ends and the second guide (76/100) bears only at one axial end of the segments (60).

3. Spindle according to claim 2, **characterised in that** the second guide (76/100) bears at the axial end of the segments (60) facing away from the receptacle (34).

4. Spindle according to one or more of claims 1 to 3, **characterised in that** the first guide (50/64, 54/78) bears only at the axial end of the segments (60) facing away from the receptacle (34) in the second operating position.

5. Spindle according to one or more of claims 1 to 4, **characterised in that** the guides (50/64, 54/78, 68/70, 72/92; 76/100) are embodied as bevel guides.

6. Spindle according to claim 5, **characterised in that** the segments (60) exhibit an essentially circular shape in radial section and **in that** the bevel guides (50/64, 54/78, 68/70, 72/92; 76/100) are formed by conical bevels (50, 54, 64, 68, 70, 72, 76, 78, 92, 100).

7. Spindle according to one of claims 1 to 6, **characterised in that** the ring (80) is braced axially against the force of the spring (88) when the clamping spindle (18) is displaced axially.

8. Spindle according to claim 7, **characterised in that** the spring (88) is relaxed in the second operating position.

9. Spindle according to claim 7 or 8, **characterised in that** the ring (80) exhibits a cylindrical portion (82) holding the spring (88), and a plurality of axially projecting shoes (86) on which the first bevels (92) are formed.

10. Spindle according to one of claims 1 to 9, **characterised in that** the sleeve (96) is fixed axially.

11. Spindle according to one of claims 1 to 10, **characterised in that** the ring (80) is located radially on the outside and the sleeve (96) is located radially on the inside.

12. Spindle according to claim 11, **characterised in that** the ring (80) is guided in a bore (84) of the spindle (10)

13. Spindle according to one of claims 1 to 10, **characterised in that** the ring (80) is located radially on the inside and the sleeve (96) is located radially on the outside.

## Revendications

1. Broche d'une machine-outil, avec un axe (46), avec un logement (34) disposé dans l'axe (46) et destiné à une queue (30) d'un porte-outil (14), et avec un mécanisme de serrage pour immobiliser axialement la queue (30) dans le logement (34), sachant que le mécanisme de serrage comprend un mandrin de serrage (18) mobile en translation axiale, plusieurs segments (60) répartis sur la circonférence du mandrin de serrage (18) et une couronne (80) pour immobiliser les segments (60) en direction circonférentielle, sachant que les segments (60), lors de la translation axiale du mandrin de serrage (18), peuvent être déplacés radialement entre une première position de service radiale et une deuxième position de service radiale au moyen d'un premier guide (50/64, 54/78) agissant entre le mandrin de serrage (18) et les segments (60), et immobilisent dans la première position de service la queue (30) en engagement positif dans le logement (34), et sachant que la couronne (80) est pourvue de premiers biais (92) qui coopèrent avec des deuxièmes biais (72) sur les segments (60), **caractérisée en ce qu'**une douille (96) réalisée coaxiale à la couronne (80) est disposée dans la région axiale de la couronne (80) et est pourvue de troisièmes biais (100) qui coopèrent en tant que deuxième guide (76/100) avec des quatrièmes biais (76) sur les segments (60), sachant que le premier/deuxième biais (92/72) est incliné en sens contraire du troisième/quatrième biais (100/76).

2. Broche selon la revendication 1, **caractérisée en ce que** les segments (60) s'étendent le long de l'axe (46) et **en ce que** le premier guide (50/64, 54/78) agit aux deux extrémités axiales et le deuxième guide (76/100) à une seule extrémité axiale des segments (60).

3. Broche selon la revendication 2, **caractérisée en ce que** le deuxième guide (76/100) agit à l'extrémité axiale des segments (60) qui est éloignée du logement (34).

4. Broche selon une ou plusieurs des revendications 1 à 3, **caractérisée en ce que**, dans la deuxième position de service, le premier guide (50/64, 54/78) agit uniquement à l'extrémité axiale des segments (60) qui est éloignée du logement (34).

5. Broche selon une ou plusieurs des revendications 1 à 4, **caractérisée en ce que** les guides (50/64, 54/78, 68/70, 72/92 ; 76/100) sont réalisés sous la forme de guides obliques.

6. Broche selon la revendication 5, **caractérisée en ce que** les segments (60) présentent une forme essentiellement en arc de cercle en coupe radiale, et **en ce que** les guides obliques (50/64, 54/78, 68/70, 72/92 ; 76/100) sont formés par des biais coniques (50, 54, 64, 68, 70, 72, 76, 78, 92, 100).

7. Broche selon une ou plusieurs des revendications 1 à 6, **caractérisée en ce que** la couronne (80) est serrée axialement à l'encontre de la force d'un ressort (88) lors de la translation axiale du mandrin de serrage (18).

8. Broche selon la revendication 7, **caractérisée en ce que** le ressort (88) est détendu dans la deuxième position de service.

9. Broche selon la revendication 7 ou 8, **caractérisée en ce que** la couronne (80) présente une partie cylindrique (82) maintenant le ressort (88), ainsi qu'une pluralité de patins (86) dépassant axialement sur lesquels sont formés les premiers biais (92).

10. Broche selon une ou plusieurs des revendications 1 à 9, **caractérisée en ce que** la douille (96) est disposée de manière axialement fixe.

11. Broche selon une ou plusieurs des revendications 1 à 10, **caractérisée en ce que** la couronne (80) se trouve radialement à l'extérieur et la douille (96) radialement à l'intérieur.

12. Broche selon la revendication 11, **caractérisée en ce que** la couronne (80) est guidée dans un perçage (84) de la broche (10).

13. Broche selon une ou plusieurs des revendications 1 à 10, **caractérisée en ce que** la couronne (80) se trouve radialement à l'intérieur et la douille (96) radialement à l'extérieur.
